# EUROPÄISCHE PATENTSCHRIFT

(11) **EP 0 384 252 B1**
(45) Veröffentlichungstag und Bekanntmachung des Hinweises auf die Patenterteilung: **31.08.1994**
(21) Anmeldenummer: 90102644.3
(22) Anmeldetag: 10.02.1990
(51) Int. Cl.: B32B 27/20, B32B 27/40

(54) **Mehrschichten-Verbundwerkstoff**
Multiply composite
Matériau composite multicouche

(30) Priorität: 24.02.1989 DE 3905790
(43) Veröffentlichungstag der Anmeldung: 29.08.1990
(73) Patentinhaber: BAYER AG, 51368 Leverkusen (DE)
(72) Erfinder: Wank, Joachim, Dipl.-Ing., D-4047 Dormagen 5 (DE); Uerdingen, Walter, Dr., D-5090 Leverkusen 1 (DE); Schrader, Lutz, Dr., D-4150 Krefeld (DE); Waldenrath, Werner, Dipl.-Ing., D-5000 Köln 1 (DE)

(56) Entgegenhaltungen:
- EP-A- 0 023 318
- EP-B- 0 031 521
- WO-A-89/10260
- DATABASE WPIL, Nr. 88-267 616 DERWENT PUBLICATIONS LTD., London, GB, & JP-A-63 194 949

## Beschreibung

Gegenstand der Erfindung ist ein Mehrschichten-Verbundwerkstoff einer Dicke von 0,3 bis 2 mm mit folgendem Schichtaufbau:
- 1. Schicht:: hochtransparenter thermoplastischer Kunststoff, Dicke 0,01 bis 0,3 mm
- 2. Schicht:: dekorgebende Farbschicht, Dicke 5 bis 50 µm und/oder Klebeschicht, Dicke 5 bis 50 µm
- 3. Schicht:: thermoplastischer Kunststoff mit 0,1 bis 30 Gew.-% Pigment, Dicke 0,05 bis 0,5 mm
- 4. Schicht:: hochelastischer Kunststoff mit bis zu 30 Gew.-% Pigment, Dicke 0,05 bis 0,8 mm
- 5. Schicht:: thermoplastischer Kunststoff mit 0,1 bis 30 Gew.-% Pigment, Dicke 0,05 bis 0,5 mm
- 6. Schicht:: dekorgebende Farbschicht, Dicke 5 bis 50 µm und/oder Klebeschicht, Dicke 5 bis 50 µm
- 7. Schicht:: hochtransparenter thermoplastischer Kunststoff, Dicke 0,01 bis 0,3 mm,
wobei die Schichten 3 und 5 auch fehlen können.

Die erfindungsgemäßen Mehrschicht-Verbundwerkstoffe dienen bevorzugt zur Herstellung von Kredit- und Ausweiskarten.

Die Schichten 1 und 7 können z.B. aus folgenden Kunststoffen bestehen: aromatische Polycarbonate, bevorzugt solche mit Molekulargewichten M̅w von 25 000 bis 200 000, insbesondere 30 000 bis 120 000, lineare Polyarylsulfone mit mittleren Molekulargewichten M̅w von 15 000 bis 50 000 (vgl. DE-AS 30 10 143), thermoplastische Celluloseester, die nach üblichen Verfahren durch Veresterung der Cellulose mit aliphatischen Monocarbonsäureanhydriden z.B. Essigsäure- und Buttersäureanhydrid oder Essigsäure- und Propionsäureanhydrid gewonnen werden. Die verwendbaren Celluloseester enthalten im allgemeinen eine gewisse Menge Hydroxylgruppen und sind oxidativ gebleicht (vgl. DE-OS 37 19 879).

Polyvinylchlorid, z.B. die handelsüblichen transparenten Typen.

Styrolacrylnitrilcopolymerisate, beispielsweise mit Molekulargewichten M̅w von 10 000 bis 600 000.

Polyalkylenterephthalate, beispielsweise die handelsüblichen Polyethylenterephthalate.

Thermoplastische ABS-Pfropfmischpolymerisate, z.B. Mischungen aus 50 bis 70 % Pfropfprodukt und 95 bis 30 Gew.-% thermoplastischer Styrolacrylnitrilcopolymerisate. Pfropfprodukte sind dabei die Reaktionsprodukte der Polymerisation von z.B. Styrol und Acrylnitril in Anwesenheit eines Kautschuks. Diese Produkte werden meist durch Emulsionspolymerisation hergestellt. Sie enthalten 5 bis 80 Gew.-% Kautschuk. Als Kautschuk kommt Polybutadien, Naturkautschuk, Butadienacrylnitrilcopolymerisat, Butadienstyrolcopolymerisate, Acrylesterpolymerisate, Vinyletherpolymerisate, EPDM-Terpolymerisate in Frage. ABS-Pfropfpolymerisate sind bekannt und beispielsweise in Ullmanns Encyclopädie der technischen Chemie, Band 19, Seite 277 ff. sowie der dort angegebenen Literatur beschrieben. Weiter geeignet sind auch Polyolefine und Polyamide. Für die Schichten 1 und 7 ist natürlich Voraussetzung, daß die Thermoplasten klar durchsichtig sind.

Die Schichten 3 und 5 können aus den gleichen thermoplastischen Kunststoffen bestehen, enthalten aber zusatzlich noch Pigmente. Sie dienen als Träger für die dekorgebenden Farbschichten 2 und 6. In manchen Fällen ist es auch möglich die Schichten 3 und 5 wegzulassen. Dann muß allerdings die dekorgebende Schicht direkt auf die Schicht 4 aufgebracht werden.

Für die Schichten 3 und 5 ist es natürlich nicht notwendig, daß die Thermoplasten transparent sind. Man hat daher mehr Auswahlmöglichkeiten.

Die Schichten 2 und 6 können Farbschichten aus handelsüblichen Sieb- oder Offsetfarben auf Acrylatbasis, PVC-Basis, Celluloseesterbasis oder Mischungen daraus sein Sie können auch aus UV-vernetzbaren Acrylatfarben bestehen, die Pigmente und/oder Farbstoffe enthalten. Je nach Beschaffenheit der Schichten 3 und 5 kann es auch erforderlich sein zusätzlich eine Kleberschicht vorzusehen. Die Kleberschicht kann auf Basis von Polyacrylat mit oder ohne Vernetzer (Isocyanate, Epoxidharz, Polyurethanharz) beruhen. Besonders geeignete dekorative Farbschichten sind solche auf Basis von Polyurethan.

Zur Herstellung geeigneter dekorativer Polyurethanfarbschichten 2 und 6 können sowohl wäßrige, auftrocknende Dispersionen von vorzugsweise linearen Polyesterpolyurethanen als auch auftrocknende organische Lösungen von vorzugsweise linearen Polyesterpolyurethanen, die gegebenenfalls ein höherfunktionelles Polyisocyanat als Vernetzer enthalten, verwendet werden, denen entsprechende Farbmittel und gegebenenfalls Verdickungsmittel wie z.B. Methylcellulose zugesetzt werden. Geeignete Polyurethandispersionen sind beispielsweise solche, auf Basis von linearen Polyesterdiolen, aromatischen oder aliphatischen Diisocyanaten und gegebenenfalls den üblichen Kettenverlängerungsmitteln, die unter Miterwendung von ionischen Aufbaukomponenten entsprechend der Lehre der US-PS 34 79 310 oder der DE-AS 14 95 847 hergestellt worden sind. Sehr gut geeignet sind auch die wäßrigen Dispersionen von Carboxylat- und Sulfonatgruppen aufweisenden, vorzugsweise linearen Polyesterpolyurethanen, wie sie gemäß DE-OS 28 04 609 erhalten werden können. Im Falle der Verwendung von organischen Lösungen von vorzugsweise linearen Polyesterpolyurethanen kommen vorzugsweise Lösungen von nicht-ionischen linearen Polyesterpolyurethanen in geeigneten Lösungsmitteln in Betracht. Bei diesen Polyurethanen handelt es sich vorzugsweise um Umsetzungsprodukte von (i) aromatischen Diisocyanaten wie 2,4-und/oder 2,6-Diisocyanatotoluol, 4,4′-Diisocyanatodiphenylmethan, Hexamethylendiisocyanat, Isophondiisocyanat oder 1,5-Diisocyanatonaphthalin oder deren Gemischen mit (II) Polyesterdiolen des Molekulargewichtsbereichs (M̅w) 1000 bis 4000, insbesondere auf Basis von Adipinsäure und geeigneten Glykolen wie Ethylenglykol, 1,4-Dihydroxybutan, 1,6-Dihydroxyhexan und deren Gemischen und gegebenenfalls (III) Kettenverlängerungsmitteln, beispielsweise den zuletztgenannten Glykolen, wobei die Reaktionspartner unter Einhaltung eines NCO/OH-Äquivalentverhältnisses von 0,9:1 bis 1:1,1, vorzugsweise 0,95:1 bis 1:1 zum Einsatz gelangen, und wobei pro Mol Polyesterdiol gegebenenfalls 0,1 bis 2 Mol Kettenverlängerer bzw Kettenverlängerergemisch zum Einsatz gelangen. Geeignete Lösungsmittel für derartige Polyesterpolyurethane sind beispielsweise Ethylacetat, Butylacetat, Methylethylketon, Methylisobutylketon oder aus derartigen Lösungsmitteln bestehende Gemische. Die Dispersionen oder Lösungen werden im allgemeinen mit einem Feststoffgehalt von 10-40 Gew.-% verwendet. 0ft kann es zweckmäßig sein, den genannten Lösungen untergeordnete Mengen eines höherfunktionellen Polyisocyanats, beispielsweise an Tris-(6-isocyanatohexyl)-biuret einzuverleiben, um die mechanischen Eigenschaften des letztendlich erhaltenen Polyurethanfilms zu verbessern. Bei Verwendung der erfindungsgemäß geeigneten dekorativen Farbschicht auf Basis der beschriebenen Polyurethane erübrigt sich eine weitere Kleberschicht, da diese dekorgebende Farbschicht unter Einwirkung von Temperatur und Druck auch die Kleberfunktion übernimmt. Als Temperatur sollte vorzugsweise 110 - 130° C und als Druck vorzugsweise 2 bis 10 bar verwendet werden.

Die Zwischenschichten 2 und 6 können entweder im Offset-oder Tiefdruck aufgebracht werden oder aber im Siebdruckverfahren.

Die gegebenenfalls erforderlichen Kleberschichten 2 und 6 werden auf die Farbdekorschichten 3 und 5 im Siebdruckverfahren aufgedruckt oder im Rollcoaterverfahren aufgebracht.

Die Zwischenschichten gemäß Komponenten 2 und 6 stellen, bei Verwendung von Polyurethanen als Harzbasis bei Raumtemperatur völlig klebfreie thermoplastische Schichten dar. Bei Verwendung anderer dekorativer Farbschichten sowie der dann erforderlichen Kleberschichten sind diese bei Raumtemperatur nicht klebfrei.

Unter Siebdruckverfahren gemäß vorliegender Erfindung versteht man das Durchdrücken von Farben bzw. Lacken durch ein um einen Rahmen gespanntes Siebgewebe, dessen Maschen partiell je nach Druckvorlage, geschlossen sind.

Die verbleibenden Öffnungen im Siebgewebe entsprechen dem Druckbild.

Bei dem Offsetdruckverfahren handelt es sich um ein indirektes Druckverfahren, bei dem der Träger des Druckbildes, z.B. Aluminium oder Zinkplatten, an den erhobenen Stellen mit Farbe beschichtet wird und diese Farbschicht mittels Gummituch bei der Flachbettmaschine oder mittels Rollen bei der Rollenoffsetmaschine auf das zu dekorierende Substrat übertragen wird (Literatur: Brockhaus Enzyklopädie 1955, Bd. 8, Seite 530).

Die Dicke der Farbschicht liegt zwischen 5 und 50 µm.

Die hochelastische Schicht 4 besteht vorzugsweise aus thermoplastischem Polyurethan mit einer Shore A-Härte zwischen 80 und 90 und einer Shore D-Härte zwischen 50 und 70. Der Schubmodul der erfindungsgemäß geeigneten hochflexiblen thermoplastischen Polyurethane liegt im Bereich -60 bis +160°C zwischen 10³ und 10¹ MPa.

Diese erfindungsgemäß besonders geeigneten thermoplastischen Polyurethane können aus Polyester, Polyether und Polyethercarbonat-Urethanen hergestellt werden.

Geeignete Polyetherurethane werden hergestellt gemäß DE-PS 23 02 564. Geeignete Polyesterurethane können gemäß DE-OS 28 42 806 erhalten werden. Die Herstellung geeigneter Polyethercarbonaturethane erfolgt gemäß DE-OS 22 48 372.

Zur Herstellung der erfindungsgemäßen Mehrschichtenverbundwerkstoffe beginnt man mit einer Folie aus dem Material der Schicht 4. Auf diese Schicht werden dann die Schichten 3 und 5 aufgebracht entweder durch Aufkaschieren fertiger Folien aus dem entsprechenden Material oder durch Erzeugung einer Schicht durch Aufgießen auf Rakeln oder Coextrudieren. Auf die so erhaltene Rohplatte werden dann, wie bereits beschrieben, durch Druckverfahren die Schichten 2 und 6 aufgebracht und schließlich die Schichten 1 und 7, bevorzugt durch Aufpressen entsprechender vorgefertiger Folien, bei erhöhten Temperaturen. Die Herstellung solcher Folien ist bekannt (vgl. z.B DE-OS 25 17 033, DE-05 25 31 240). Es kann sich um beidseitig polierte Folien handeln oder um einseitig polierte und einseitig mattierte. Diese Folien für die Schichten 1 und 7 bestehen bevorzugt aus Polycarbonaten, Polyalkylenterephthalat, PVC, Celluloseestern oder SAN.

Die Folien für die Schichten 3 und 5 bestehen bevorzugt aus Polycarbonaten oder Mischungen von Polycarbonaten mit ABS, Polyalkylenterephthalat oder thermoplastischem Polyurethan.

### Beispiel 1

Eine 250 µm dicke Folie aus Polyethercarbonaturethan mit einer Shore A-Härte von 85 und einem Schubmodul bei 20°C von 8.10° MPa wird auf beiden Seiten mit der Schmelze eines aromatischen Polycarbonats auf Basis Bisphenol A (ηᵣₑₗ = 1,31, gemessen in CH₂Cl₂ bei 25° C und einer Konzentration von 0,5 g/100 ml) im Extrusionsbeschichtungsverfahren beschichtet und der Verbund über Kühlwalzen abgezogen. Der Düsenspalt der Breitschlitzdüse für die Polycarbonatschmelze wird so eingestellt, daß bei einer Abzugsgeschwindigkeit von 10 m/min die Dicke der Polycarbonatschicht 200 µm beträgt. Das Polycarbonatausgangsmaterial enthält 15 % TiO₂ als Pigment.

Auf die so hergestellte Dreischichtfolie wird das Dekor beidseitig mit einer Siebdruckfarbe auf Basis einer wäßrigen Polyurethandispersion im Siebdruckverfahren aufgebracht.

Die so dekorierte Verbundfolie wird beidseitig mit einer 0,05 mm dicken, hochtransparenten, aromatischen Polycarbonatfolie (ηᵣₑₗ = 1,32, gemessen in CH₂Cl₂ bei 25° C und 0,5 g/100 ml) in der Weise kaschiert, daß zwischen 2 Lagen der hochtransparenten Polycarbonatfolie, wobei eine dieser Polycarbonatfolien mit einem Magnetstreifen versehen sein kann, die fertig dekorierte Verbundfolie gelegt wird und der Gesamtverbund bei 110° C und einem spez. Druck von 2 bar verpreßt wird

Aus diesem Verbund werden die Kredit-Karten-Rohlinge in an sich bekannter Weise ausgestanzt.

Das Prägen der Kennzeichnung und des Codes erfolgt in an sich bekannter Weise auf handelsüblichen Prägeautomaten.

Die so hergestellte Kreditkarte hat eine Wölbung von <0,5 mm, eine Temperaturbestandigkeit von >100° C und eine dynamische Wechselbiegefestigkeit von >100 000 Wechseln.

### Beispiel 2

Herstellung eines Verbundes gemäß Beispiel 1 unter Verwendung einer 0,4 mm dicken Folie aus thermoplastischem Polyesterpolyurethan mit einer Shore D-Härte von 60 und einem Schubmodul bei 100° C von 2.10¹ MPa.

Diese thermoplastische Polyurethanfolie wird gemäß Beispiel 1 mit einem Blend aus 60 Gew.-Teilen aromatischem Polycarbonat und 40 Gew-Teilen Polybutylenterephthalat, mit einem Pigmentgehalt von 10 % beschichtet, so daß der Verbund eine Gesamtdicke von 650 µm aufweist

Diese Verbundfolie wird im Offsetdruckverfahren beidseitig mit UV-vernetzbaren Farben bedruckt und anschließend mit freien OH-gruppenhaltigen Acrylatharzklebern, denen eine äquivalente Menge eines aliphatischen Isocyanats zugesetzt wurde, beschichtet. Die so mit Kleber beschichtete Folie wird beidseitig mit einer 50 µm dicken Folie aus biaxialverstreckter PETP-Folie kaschiert, wobei eine der PETP-Folien einen Magnetstreifen enthält. Die Weiterverarbeitung der Folie beschicht gemäß Beispiel 1.

Die Karte hat nach Prägung eine Wölbung von (0,5 mm, eine Temperaturbeständigkeit von 120° C und eine dynamische Wechselbeständigkeit von >100 000 Zyklen.

### Beispiel 3

Eine 0,4 mm dicke Folie aus einer mit 20 % TiO₂ pigmentierten Polyesterurethanfolie mit einer Shore A-Härte von 85 wird beidseitig Korona-behandelt und anschließend mit den erfindungsgemäß bevorzugten Siebdruckfarben auf Basis aliphatischer Polyesterurethane im Siebdruckverfahren bedruckt. Die so dekorierte Folie wird beidseitig mit einer 0,2 mm dicken hochtransparenten Folie aus aromatischem Polycarbonat im Heißpreßverfahren gemäß Beispiel 1 kaschiert. Eine der Polycarbonatfolien ist mit einem Magnetstreifen versehen.

Die Weiterverarbeitung erfolgt gemäß Beispiel 1. Die so hergestellte Kreditkarte hat eine Wölbung nach der Prägung von <0,5 mm, eine Temperaturbeständigkeit von >100 und eine Wechselbiegefestigkeit von >100 000 Zyklen.

## Patentansprüche

1. Mehrschichten-Verbundwerkstoff einer Dicke von 0,3 bis 2 mm mit folgendem Schichtaufbau:
1. Schicht: hochtransparenter thermoplastischer Kunststoff, Dicke 0,01 bis 0,3 mm
2. Schicht: dekorgebende Farbschicht, Dicke 5 bis 50 µm und/oder Klebeschicht, Dicke 5 bis 50 µm
3. Schicht: thermoplastischer Kunststoff mit 0,1 bis 30 Gew.-% Pigment, Dicke 0,05 bis 0,5 mm
4. Schicht: hochelastischer Kunststoff mit bis zu 30 Gew.-% Pigment, Dicke 0,05 bis 0,8 mm
5. Schicht: thermoplastischer Kunststoff mit 0,1 bis 30 Gew.-% Pigment, Dicke 0,05 bis 0,5 mm
6. Schicht: dekorgebende Farbschicht, Dicke 5 bis 50 µm und/oder Klebeschicht, Dicke 5 bis 50 µm
7. Schicht: hochtransparenter thermoplastischer Kunststoff, Dicke 0,01 bis 0,3 mm, wobei die Schichten 3 und 5 auch fehlen können.

2. Verbundstoff gemäß Anspruch 1, worin die Schicht 4 aus Polyethercarbonat-Polyesterurethan oder Polyetherurethan besteht.

## Claims

1. Multi-layer composite material of a thickness of 0.3 to 2 mm with the following layer structure:
1st layer: highly transparent thermoplastic, thickness 0.01 to 0.3 mm
2nd layer: decorative coloured layer, thickness 5 to 50 µm and/or adhesive layer, thickness 5 to 50 µm
3rd layer: thermoplastic with 0.1 to 30 wt.% pigment, thickness 0.05 to 0.5 mm
4th layer: highly elastic plastic with up to 30 wt.% pigment, thickness 0.05 to 0.8 mm
5th layer: thermoplastic with 0.1 to 30 wt.% pigment, thickness 0.05 to 0.5 mm
6th layer: decorative coloured layer, thickness 5 to 50 µm and/or adhesive layer, thickness 5 to 50 µm
7th layer: highly-transparent thermoplastic, thickness 0.01 to 0.3 mm,
wherein layers 3 and 5 may also be absent.

2. Composite material according to claim 1, in which layer 4 consists of polyether carbonate/polyester urethane or polyether urethane.

## Revendications

1. Matériau composite multicouches d'une épaisseur de 0,3 à 2 mm avec la structure de couche suivante :
1^{ère} couche : matière thermoplastique très transparente, d'épaisseur 0,01 à 0,3 mm,
2^{ème} couche : couche colorée formant un décor, d'épaisseur 5 à 50 µm et/ou couche adhésive, d'épaisseur 5 à 50 µm,
3^{ème} couche : matière thermoplastique avec 0,1 à 30 % en poids de pigment, d'épaisseur 0,05 à 0,5 mm,
4^{ème} couche : matière plastique très élastique avec jusqu'à 30 % en poids de pigment, d'épaisseur 0,05 à 0,8 mm,
5^{ème} couche : matière thermoplastique avec 0,1 à 30 % en poids de pigment, d'épaisseur 0,05 à 0,5 mm,
6^{ème} couche : couche colorée formant un décor, d'épaisseur 5 à 50 µm et/ou couche adhésive, d'épaisseur 5 à 50 µm,
7^{ème} couche : matière thermoplastique très transparente, d'épaisseur 0,01 à 0,3 mm,
dans lequel les couches 3 et 5 peuvent aussi manquer.

2. Composite selon la revendication 1, dans lequel la couche 4 est en polyéthercarbonate-polyesteruréthanne ou en polyétheruréthanne.
